# EUROPÄISCHE PATENTANMELDUNG

(11) **EP 1 347 197 A1**
(43) Veröffentlichungstag der Anmeldung: **24.09.2003**
(21) Anmeldenummer: 03006002.4
(22) Anmeldetag: 18.03.2003
(51) Int. Cl.: F16F 1/12, F16M 11/04, G02B 7/00

(54) **Federelement**

(30) Priorität: 19.03.2002 DE 20204321 U
(71) Anmelder: Leica Microsystems (Schweiz) AG, 9435 Heerbrugg (CH)
(72) Erfinder: Metelski, Andrzej, 8590 Romanshorn (CH)
(74) Vertreter: Reichert, Werner F., Dr.

(57) **Zusammenfassung**

Es wird ein Federelement, mit einem im wesentlichen zylindrischen Gehäuse (125) und wenigstens einer darin angeordneten Feder (128) beschrieben. Zwischen der Außenseite der Feder (128) und der Innenseite des Gehäuses (125) ist zumindest ein die Feder (128) radial abstützendes Führungsglied (129) angeordnet.

## Beschreibung

Die Erfindung betrifft ein Federelement, insbesondere zur Verwendung in einem Stativ für Operationsmikroskope, gemäß dem Oberbegriff des Patentanspruches 1.

Die von Stativen getragenen Operationsmikroskope müssen über einen vorgegebenen Bereich leicht schwenkbar sein und die eingestellte Position beibehalten. Ein Stativ mit einer Federvorrichtung zum Gewichtsausgleich ist aus der DE 3739080 A1 bekannt. Hier ist der Gewichtsausgleich durch die Kombination von Seilzügen mit Federn realisiert. Dabei geht es jedoch um die Kraftunterstützung einer Verstellbewegung, die eine Bedienperson an einem Handgriff ausübt. Es gibt von diesem Stand der Technik aus keine Lehre, eine Last in einem austarierten, "schwebenden Zustand" zu halten, wie dies bei Operationsmikroskopen gewünscht ist.

Die DE 19742050 A1 (1999) offenbart einen Stativaufbau mit einem schwenkbaren Parallelogrammträger, der über einen Seilzug und eine Gewichtsausgleichsfeder so gewichtskompensiert ist, dass die zusätzlich vorhandenen Ausgleichsgewichte besonders klein ausgebildet sein können. Bei diesem Aufbau wird der Seilzug in besonderer Form geführt, um den durch den endlichen Umlenkradius bedingten Gewichtsausgleichsfehler in einem weiten Schwenkbereich des Schwenkarms zu minimieren. Der Gewichtsausgleichsfehler wird durch diese Maßnahme jedoch nicht eliminiert, so dass bei bestimmten Schwenkpositionen nach wie vor das Verstellen der Ausgleichsgewichte erforderlich ist.

Die US 6070839 (2000) offenbart einen weiteren Aufbau mit einem Schwenkarm und einer Seilzug-Feder-Konstruktion, die einen reinen Gewichtsausgleich - im Sinne des oben erwähnten Gewichtsausgleichs mit diagonaler Stützfeder - ermöglicht, ohne jedoch auch Ausgleichsmomente zu einer Verbesserung der Kippsicherheit beizutragen.

Die US 5253832 (1999) beschreibt ein Stativ mit einer zentral angeordneten Zugfeder für den Gewichtsausgleich. Dieser Aufbau bietet keine einfache Verstellmöglichkeit für geänderte Lasten, so dass Änderungen an einem Mikroskop oder an seinem Zubehör nicht ohne weiteres zu einer Justierung der Ausgleichskräfte führen können. Zudem ist es nachteilig, dass die Zugfeder - in Abhängigkeit von der Schwenkstellung des Tragarms - über einen unterschiedlichen Kompressions- bzw. Expansionsgrad verfügt, was aufgrund der Federkennlinie zu unterschiedlichen Ausgleichskräften und damit zu einem Ausgleichsverhalten führt, das über den Schwenkbereich des Tragarms unterschiedlich und somit für einen Anwender im chirurgischen Bereich unbrauchbar ist.

Für besonders leistungsstarke Gewichtskompensation auf kleinem Raum sind Federn ideal. Sowohl Zug-, als auch Druckfedern eignen sich je nach Anbringungsort. Theoretisch wären Federn ideal, die über einen bestimmten Kompressions- oder Expansionsweg die gleiche Kraft aufbringen. Solche Federn sind jedoch bei einem vergleichbaren Aufbau mit den vergleichbaren Parametern nicht einsetzbar. Daher werden vorzugsweise herkömmliche Federn benutzt, die jedoch mittels Kompensationsausgleich in Form von Kurven o.dgl. eine Bewegung (Hoch-Tief-Schwenken) der Last tolerieren, um stets gleiche Kompensationskraft bzw. Kompensationsmomente aufzubringen.
Es ist daher Aufgabe der vorliegenden Erfindung, einen Stativaufbau mit einer herkömmlichen Feder zu realisieren und dabei auch die Verwendung von langen Federn zu ermöglichen.

Diese Aufgabe wird erfindungsgemäß durch die Merkmale des Anspruchs 1 gelöst. Vorteilhafte Weiterbildungen der Erfindung sind Gegenstand der Unteransprüche.

Um bei Druckfedern größerer Baulänge ein Ausknicken der Feder unter Druckbelastung zu verhindern, ist zwischen der Außenseite der Feder und der Innenseite des Gehäuses mindestens ein die Feder radial abstützendes Führungsglied angeordnet. Das Führungsglied ist vorteilhaft hülsenförmig ausgebildet.

Um die Reibung und somit Verluste zu reduzieren, ist es zweckmäßig, das Führungsglied mit Wälzlagerelementen, beispielsweise Kugellaufbüchsen, zu versehen oder als Gleitlager auszubilden.

Um die Charakteristik der Federelemente zu beeinflussen, ist vorteilhaft, wenn ein den Verschiebeweg des Führungsgliedes begrenzender, axialer Anschlag vorgesehen.

Um nichtlineare resultierende Federkennlinien zu erreichen, sind wenigstens zwei axial hintereinander angeordnete, in Serie geschaltete, Druckfedern vorgesehen, wobei die Federn über das axial verschiebbare Führungsglied aufeinander abgestützt sind und gleiche oder unterschiedliche Federkonstanten aufweisen.

Bei gleichen Federkonstanten ergibt sich dann ein Knick in der Federcharakteristik, indem im nichtblockierten Zustand der einen Feder, bei gleicher Kraft, den doppelten Weg ermöglicht, während im blockierten Zustand, bei gleicher Kraft, nur der einfache Weg zurückgelegt werden kann.
Eine weitere vorteilhafte Ausführung besteht darin, dass das Gehäuse als pneumatischer Zylinder mit einem im Zylinder axial verschiebbaren Kolben ausgebildet ist, wobei die Feder wenigstens einen Teil des Kolbens umfasst.
Der Kolben kann gleichzeitig auch als Führungsglied ausgebildet werden. Dadurch können zu der Federkraft noch pneumatische Federkräfte und/oder Dämpfungselemente, wie bei einem Stossdämpfer, eingesetzt werden.

Die Erfindung ist in Ausführungsbeispielen dargestellt und wird mit den schematischen Zeichnungen näher erläutert. Es zeigen dabei:
- Fig. 1: ein Federelement mit einer über ein Führungsglied radial abgestützten Druckfeder
- Fig. 2: eine Variante des in Fig. 1 dargestellten Federelements mit zwei über ein Führungsglied axial aufeinander abgestützten Druckfedern, und
- Fig. 3: ein Federelement kombiniert mit einem pneumatischen Druckzylinder.

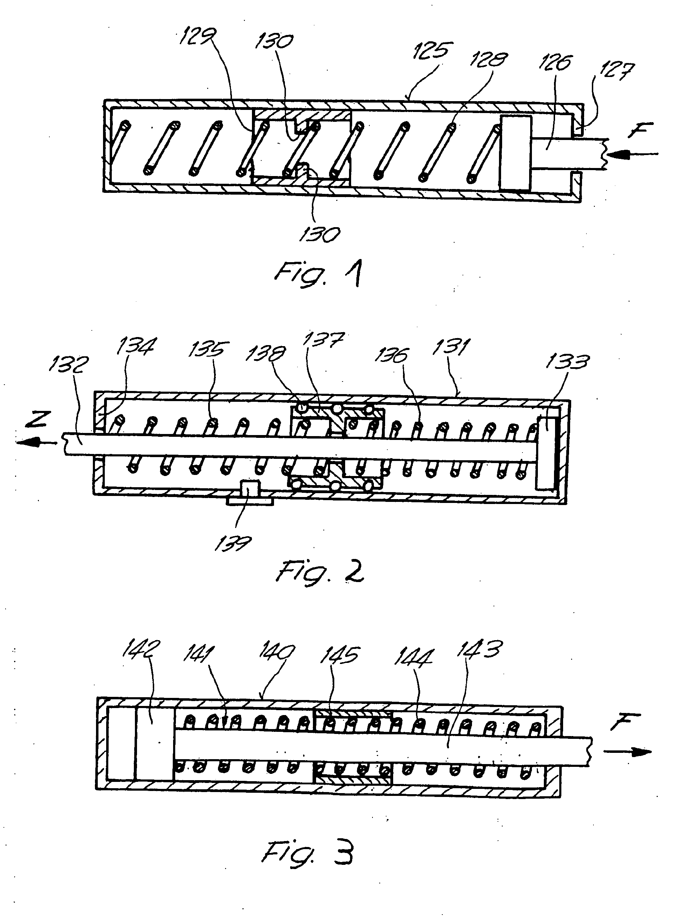

Das aus Fig. 1 ersichtliche Federelement besteht im wesentlichen aus einem Gehäuse 125 und einem darin verschiebbar gelagerten Stößel 126. Zwischen der rückwärtigen Stirnwand 127 und dem Stößel 126 ist eine Druckfeder 128 angeordnet. Die Druckfeder 128 ist zur deutlicheren Anschauung des Federelements verkürzt darstellt. Bei gewünschtem größerem Federweg des Stößels 126 kann die Druckfeder 128 auch erheblich länger dimensioniert sein. Dabei besteht die Gefahr, dass die Druckfeder 128 radial ausknickt und mit der Innenwandung des Gehäuses 125 in Berührung kommt. Um dies zu verhindern ist im mittleren Bereich der Druckfeder 128 ein etwa zylindrisch ausgebildetes, axial verschiebbares Führungsglied 129 angeordnet. Das Führungsglied 129 kann aus Kunststoff oder einem Lagermetall, wie beispielsweise Bronze, bestehen, so dass in allen Gebrauchslagen des Federelements definierte Reibungsverhältnisse vorgegeben sind. Das Führungsglied 129 weist zwei Nocken 130 auf, welche in die Windungen der Druckfeder 128 eingreifen. Somit wird beim axialen Zusammenstauchen der Druckfeder 128 das Führungsglied 129 mitgenommen, sodass es sich unabhängig von der Einfederung der Druckfeder 128 immer im vorgegebenen Bereich der Druckfeder 128 befindet und somit eine optimale Führung ergibt. Bei einem Führungsglied 129 ist das Führungsglied 129 in der Mitte der Feder 128 und bei mehreren Gliedern 129 sind diese Führungsglieder 129 symmetrisch entlang der Längsachse der Feder 128 aufgeteilt.

Das der in Fig. 2 gezeigte Federelement besteht aus einem Gehäuse 131 mit einer darin verschiebbaren Zugstange 132, mit einem im Durchmesser vergrößerten Kopf 133. Zwischen der vorderen Stirnwand 134 des Gehäuses 131 und dem Kopf 133 sind zwei Druckfedern 135 und 136 über ein Führungsglied 137 axial aufeinander abgestützt. Das Führungsglied 137 ist im Gehäuse 131 über Wälzlagerelemente 138, beispielsweise Kugellaufbüchsen, geführt, welche sich durch eine sehr geringe Reibung auszeichnen. Die Druckfedern 135, 136 können gleiche oder unterschiedliche Federeigenschaften aufweisen. Im Gehäuse 131 ist ein Anschlag 139 vorgesehen. Durch das Auflaufen des Führungsgliedes 137 am Anschlag 139 wird die Wirkung der Druckfeder 135 begrenzt. Somit kann über den gesamten Federweg der Druckfedern 135, 136 eine nichtlineare Federcharakteristik erzielt werden. Der Anschlag 139 kann jedoch auch ausrückbar sein, sodass die Federkennlinie des Systems beeinflusst werden kann.

Das aus der Fig. 3 ersichtliche Federelement besteht aus einem Zylinder 140 mit einem pneumatischen Kolben 141. Das Federelement bildet somit ein System ähnlich einer Fahrradpumpe. Der Kolben 141 weist einen Kopf 142 und einen gegenüber diesem im Durchmesser reduzierten Schaft 143 auf. Der Schaft 143 wird von einer Druckfeder 144 umgeben, wobei sich der Kopf 142 des Kolbens 141 in axialer Richtung an der Druckfeder 144 abstützt. Die Druckfeder 144 ist in ihrem mittleren Bereich über ein hülsenförmiges Führungsglied 145 im Zylinder 140 radial abgestützt. Das Führungsglied 145 kann bei einer Einfederung der Druckfeder 144 infolge der Reibung axial mitwandern oder, wie in Fig. 1, mit Nocken 130 oder anderen Mitnehmern mit den Windungen der Druckfeder 144 verbunden sein. Der Zylinder 140 und der Kolben 141 wirken zusammen wie eine Gasdruckfeder. Durch Abstimmen der Federcharakteristik dieser Gasdruckfeder mit den Eigenschaften der Druckfeder 144, kann die gewünschte Federkennlinie der gesamten Federelement erreicht werden.

Die Elemente der gezeigten Federn aus den Figuren 1 - 3 sind natürlich untereinander austauschbar, so dass die Federelement der Fig. 1 auch das Wälzlager 138 oder das Gleitlager 129 aufweisen kann.

### Bezugszeichenliste

- 125: - Gehäuse
- 126: - Stößel
- 127: - rückwärtige Stirnwand
- 128: - Druckfeder
- 129: - Führungsglied
- 130: - Nocken
- 131: - Gehäuse
- 132: - Zugstange
- 133: - Kopf
- 134: - vordere Stirnwand
- 135: - Druckfeder
- 136: - Druckfeder
- 137: - Führungsglied
- 138: - Wälzlagerelement
- 139: - Anschlag
- 140: - Zylinder
- 141: - Kolben
- 142: - Kopf
- 143: -Schaft
- 144: - Druckfeder
- 145: - Führungsglied

## Patentansprüche

1. Federelement, mit einem im wesentlichen zylindrischen Gehäuse (125, 131, 140) und wenigstens einer darin angeordneten Feder (128, 135, 136, 144), **dadurch gekennzeichnet, dass** zwischen der Aussenseite der Feder (128, 135, 136, 144) und der Innenseite des Gehäuses (125, 131, 140) zumindest ein die Feder (128, 135, 136, 144) radial abstützendes Führungsglied (129, 137, 145) angeordnet ist.

2. Federelement nach Anspruch 1, **dadurch gekennzeichnet, dass** das Führungsglied (129, 137, 145) hülsenförmig ausgebildet ist.

3. Federelement nach Anspruch 1 oder 2, **dadurch gekennzeichnet, dass** das Führungsglied (137) ein oder mehrere, seine Axialbewegung ermöglichende Wälzlagerelemente (138) aufweist.

4. Federelement nach Anspruch 3, **dadurch gekennzeichnet, dass** das Führungsglied (137) nach Art einer Kugellaufbüchse ausgebildet ist.

5. Federelement nach einem der vorangehenden Ansprüche, **dadurch gekennzeichnet, dass** das Führungsglied (129, 145) als Gleitlager ausgebildet ist.

6. Federelement nach einem der vorangehenden Ansprüche, **dadurch gekennzeichnet, dass** im Gehäuse (131) wenigstens ein den Verschiebeweg des Führungsgliedes (137) begrenzender, axialer, vorzugsweise entfernbarer oder entlang des Gehäuses (131) verstellbarer Anschlag (139) vorgesehen ist.

7. Federelement nach einem der vorangehenden Ansprüche, **dadurch gekennzeichnet, dass** wenigstens zwei axial hintereinander angeordnete, in Serie geschaltete Druckfedern (135, 136) vorgesehen sind, wobei die Federn (135, 136) über das axial verschiebbare Führungsglied (137) aufeinander abgestützt sind.

8. Federelement nach Anspruch 7, **dadurch gekennzeichnet, dass** die Druckfedern (135, 136) unterschiedliche Federkonstanten aufweisen.

9. Federelement nach einem der vorangehenden Ansprüche, **dadurch gekennzeichnet, dass** das Gehäuse als pneumatischer Zylinder (140) mit einem im Zylinder (140) axial verschiebbar gelagerten Kolben (141) ausgebildet ist, wobei die Feder (144) wenigstens einen Teil des Kolbens (141) umgibt.

10. Federelement nach einem der vorangehenden Ansprüche, **dadurch gekennzeichnet, dass** das Federelement in einem Stativ für Operationsmikroskope verwendet wird.
